Europäisches Patentamt

European Patent Office

Office européen des brevets

(11) Publication number: **0 272 356 B1**

# EUROPEAN PATENT SPECIFICATION

(45) Date of publication of patent specification: **08.04.92** (51) Int. Cl.⁵: **A01D 34/64**

(21) Application number: **86310110.1**

(22) Date of filing: **23.12.86**

(54) **Mowing apparatus.**

(43) Date of publication of application:
**29.06.88 Bulletin 88/26**

(45) Publication of the grant of the patent:
**08.04.92 Bulletin 92/15**

(84) Designated Contracting States:
**AT BE CH DE ES FR GR IT LI LU NL SE**

(56) References cited:
**EP-A- 27 295           EP-A- 0 141 974**
**DE-A- 817 828          FR-A- 2 375 814**
**GB-A- 1 037 293        GB-A- 2 176 684**

(73) Proprietor: **TAARUP-KIDD FARM MACHINERY LIMITED**
**51, Eastcheap**
**London EC3M 1JP(GB)**

(72) Inventor: **Barker, Malcolm**
**Callisto Wick Lane**
**Devizes Wiltshire(GB)**

(74) Representative: **Carpenter, David et al**
**MARKS & CLERK Alpha Tower Suffolk Street**
**Oueensway**
**Birmingham B1 1TT(GB)**

## Description

This invention relates to crop mowing apparatus of the kind which incorporates a plurality of mowing units which each comprise a cutting device adapted in use to be rotated about a generally vertical axis whilst in contact with the crop to be cut. Commonly such apparatus is connected to the rear of a tractor which then traverses the apparatus over the crop. Generally, the mowing units are mounted in a side-by-side arrangement on an elongate frame which extends transverse to the direction of travel of the apparatus in use. It is desirable to make the apparatus as wide as possible so as to reduce the number of passes which must be made over a field to mow the whole crop. However, the maximum width of the apparatus is also determined by the need to be able to transport the apparatus on roads and also the need to be able to pass through gates and other restricted openings.

It is an object of the present invention to provide a mowing apparatus which provides the maximum width when in use yet which complies with legal requirements regarding width when being towed on the open road. This object is achieved by mounting one or more further mowing units on a movable arm which may be positioned to give maximum width in use yet may be moved to reduce the overall width of the apparatus when being towed or transported.

In a known mowing apparatus primarily for use in orchards or like environments and usually referred to as a "grass topper" or an "orchard grass topper", an outermost rotary cutter is carried by an arm which can pivot relative to the main frame of the apparatus about the axis of the, or one of the, rotary cutters carried by the main frame and a spring device urges the arm to pivot to an outer operative position in which the mowing width of the apparatus is maximised. The spring device permits the cutter and its supporting arm to be deflected relative to the main frame by trees in the path of the cutter to avoid damage to the tree and/or the cutter, but there is no intention to, or facility for, adjusting the position of the outermost cutter for transport, and so the "orchard grass topper" does not even address the problems which the present invention seeks to minimise.

EP-A-27295 discloses a mowing device which is coupled to a towing tractor by a draw-bar, there being a pivotal connection between the draw-bar and the tractor and between the draw-bar and the mowing device whereby the position of the mowing device relative to the tractor and its path of movement can be varied.

In accordance with the present invention there is provided a crop mowing apparatus of the kind specified wherein one or more mowing units are mounted in a generally side-by-side relation on an elongate frame or support which extends in a direction which is transverse to the intended direction of traverse of the apparatus over a crop which is to be cut and wherein one more more further mowing units are mounted on a further elongate frame or support which is adapted at one end to be connected to a tractor and which is pivotally connected at its other end to one end of said first mentioned elongate frame or support, the or each further mowing unit being slidable along said further elongate frame or support and being connected by means of a link to the first elongate frame or support whereby pivotal movement of said two frames or supports relative to each other will result in said further mowing unit or units sliding along the further frame or support to effect a variation in the relative configuration of the mowing units and corresponding adjustment in the overall width of the apparatus.

Preferably, said further mowing units are mounted on said further elongate frame or support via a slide provided thereon.

It is also preferred that the slide is connected to said first mentioned elongate frame or support by means of said link.

The present invention will now be described by way of example with reference to the accompanying drawings in which:-

Fig. I shows a schematic plan view of the mowing apparatus in accordance with the present invention being pulled across a crop by a tractor, and

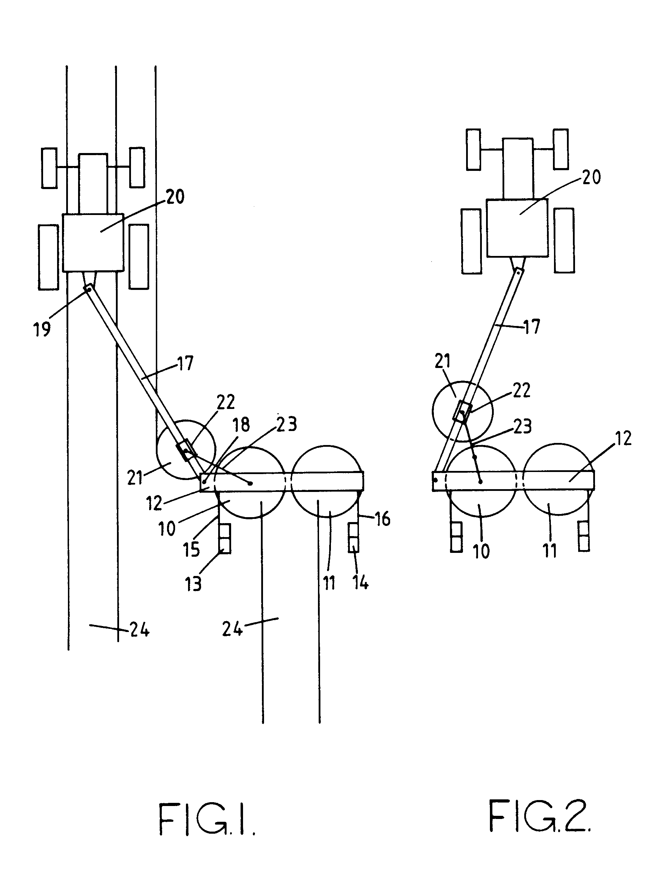

Fig. 2 shows a schematic plan view of the mowing apparatus shown in Fig. I and being towed on open roads.

Referring now to Figs. I and 2, the mowing apparatus comprises two mowing units I0, II mounted side by side on an elongate frame I2 and each adapted to rotate on a generally vertical axis. The frame I2 extends generally transverse to the intended direction of travel of the apparatus. The frame I2 is supported by idler wheels I3, I4, one wheel being mounted at either end of the frame I2 and each wheel mounting I5, I6 being adjustable to determine the height of the mowing units above the ground. An elongate towing arm I7 is connected at one end thereof to a pivot I8 provided at one end of the frame I2, and at its other end I9, to a tractor 20 by means of a further pivot.

A further mowing unit 2I is carried on the towing arm I7 by means of a slide mounting 22 which allows the further mowing unit 2I to be moveable along the arm I7. A radius arm 23 connects the slide mounting 22 to the frame I2 at a point above the centre of one mowing unit I0, pivots being provided at each end of the radius arm 23.

In use, the tractor 20 tows the apparatus from a position ahead and to one side of the apparatus. Consequently, the towing arm l7 extends at an angle to the support frame l2 and the slide mounting 22 is locked in position determined by the length of the radius arm 23. The further mowing unit 2l is therefore positioned slightly ahead of, and to the outside of the mowing unit l0 and the width of the strip of crop being cut extends from the outermost limit of the further mowing unit 2l to the outermost limit of the mowing unit ll. The cut crop is transferred from the further mowing unit 2l onto the mowing unit l0 where it meets the crop delivered from the mowing unit ll. The whole crop stream is then transferred through the mower and deposited in the correct relationship to the end cut crop, i.e. a single swath 24 extending parallel to the direction of traverse of the apparatus such that the tractor 20 straddles a previous swath when towing the apparatus across the crop.

When the apparatus is to be towed on open roads or through gates, the towing arm l7 is rotated across the apparatus so that the tractor 20 tows the apparatus from a point ahead of the centre of the frame l2. The action of rotating the towing arm about the pivot l8 causes the slide mounting 22 and thus the further moving unit 2l to move along the towing arm l7 due to the fixed length of the radius arm 23. The further mowing unit 2l is then positioned ahead of the mowing unit l0 and the slide mounting 22 is held in position on the towing arm l7 to provide a rigid arrangement. This action reduces the overall widtth of the mowing units l0, ll and 2l to the required dimension to allow passage through gates and to comply with legal requirements on public roads.

In order to prepare the apparatus for mowing, the towing arm l7 is rotated away from the frame l2 until the maximum width is obtained. The towing arm l7 may be held in position relative to the frame l2 by means of a telescopic link (not shown) or alternatively means (also not shown) may be provided to lock the slide mounting 22 on the towing arm l7 in either of the two alternative configurations.

The radius arm 23 ensures that the further mowing unit 2l is always the same distance from the mowing unit l0 and so avoids the possibility of there being contact between the two. Additionally mowing unit or units could be carried by the slide mounting 22 if desired.

## Claims

1. A crop mowing apparatus incorporating a plurality of mowing units which each comprise a cutting device adapted in use to be rotated about a generally vertical axis, wherein one or more mowing units (10, 11) are mounted in a generally side-by-side relation on an elongate support (12) which in use extends in a direction which is transverse to the intended direction of traverse of the apparatus over a crop which is to be cut and a further elongate support (17) which is adapted at one end (19) to be connected to a tractor (20) and which is pivotally connected at its other end (18) to one end of said first mentioned elongate support (12), the apparatus being characterized by one or more further mowing units (21) mounted on said further elongate support (17), the or each further mowing unit (21) being slidable along said further elongate support (17) and being connected by means of a link (23) to the first elongate support (12) whereby pivotal movement of said two supports (12, 17) relative to each other will result in said further mowing unit (21) or units sliding along the further support (17) to effect a variation in the relative configuration of the mowing units (10, 11, 12) and corresponding adjustment in the overall width of the apparatus.

2. A crop mowing apparatus as claimed in Claim 1, characterized in that said one or more further mowing units (21) are mounted on said further elongate support (17) via a slide (22) provided thereon.

3. A crop mowing apparatus as claimed in Claim 1 or 2, characterized in that the slide (22) is connected to said first mentioned elongate support (12) by means of said link (23).

4. A crop mowing apparatus as claimed in any preceding claims characterized in that the first mentioned support (12) is supported by idler wheels (13, 14).

## Revendications

1. Appareil de fauche dans lequel sont incorporées plusieurs unités de fauche qui comprennent chacune un dispositif de coupe conçu pour tourner, lors de la mise en service, autour d'un axe généralement vertical, dans lequel une ou plusieurs unités de fauche (10, 11) sont montées en relation généralement côte à côte sur un support allongé (12) qui, lors de la mise en service, s'étend dans une direction transversale par rapport à la direction que doit suivre l'appareil lorsqu'il passe à travers une culture qui doit être coupée, et sur un autre support allongé (17) qui est conçu pour être relié à une extrémité (19) à un tracteur (20) et qui est relié en pivotement à son autre extrémité (18), à une extrémité dudit support allongé (12) mentionné en premier lieu, l'appareil étant caractérisé par une ou plusieurs autres unités de fauche (21) montées sur ledit autre support allongé (17), l'autre unité de fauche (21) ou chacune de ces dernières étant apte à coulisser le long dudit autre support allongé (17) et étant reliée au moyen d'une articulation (23) au premier support allongé (12), le mouvement pivotant desdits deux supports (12, 17) l'un par rapport à l'autre donnant lieu au fait que ladite ou lesdites autres unités de fauche (21) coulissent le long de l'autre support (17) pour mettre en oeuvre une variation quant à la configuration relative des unités de fauches (10, 11, 12), ainsi qu'un réglage correspondant quant à la largeur hors-tout de l'appareil.

2. Appareil de fauche selon la revendication 1, caractérisé en ce que ladite ou lesdites autres unités de fauche (21) sont montées sur ledit autre support allongé (17) à l'intervention d'un coulisseau (22) qui y est procuré.

3. Appareil de fauche selon la revendication 1 ou 2, caractérisé en ce que le coulisseau (22) est relié audit support allongé (12) mentionné en premier lieu, au moyen de ladite articulation (23).

4. Appareil de fauche selon l'une quelconque des revendications précédentes, caractérisé en ce que le support (12) mentionné en premier lieu est supporté par des roues libres (13, 14).

**Patentansprüche**

1. Mähmaschine, enthaltend eine Anzahl Mäheinheiten, die jeweils eine Schneideinrichtung aufweisen, die im Gebrauch vorgesehen ist, um eine im allgemeinen vertikale Achse zu rotieren, wobei eine oder mehrere Mäheinheiten (10, 11) in einer im allgemeinen nebeneinandergelagerten Beziehung auf einem langgestreichten Träger (12) angeordnet sind, der sich im Gebrauch in einer Richtung erstreckt, die quer zur beabsichtigten Verschieberichtung der Maschine über das Mahdgut verläuft, das zu schneiden ist, und einen weiteren langgestreichten Träger (17) der an einem Ende (19) dazu ausgebildet ist, mit einer Zugmaschine (20) verbunden zu werden, und der an seinem anderen Ende (18) schwenkbar mit einem Ende des erstgenannten langgestreichten Trägers (12) verbunden ist, gekennzeichnet durch eine oder mehrere weitere Mäheinheiten (21), die an dem weiteren langgestreichten Träger (17) angeordnet sind, wobei die oder jede weitere Mäheinheit (21) entlang des weiteren langgestreichten Trägers (17) verschiebbar und mittels eines Gelenks (23) mit dem ersten langgestreichten Träger (12) verbunden ist, durch eine Schwenkbewegung der zwei Träger (12, 17) in Bezug zueinander dazu führt, daß aus der die weitere Mäheinheit (21) oder die weiteren Mäheinheiten entlang des weiteren Trägers (17) gleiten, um eine Veränderung in der relativen Kofiguration der Mäheinheiten (10, 11, 12) und eine entsprechende Verstellung in der Gesamtbreite der Maschine zu bewirken.

2. Mähmaschine nach Anspruch 1, dadurch gekennzeichnet, daß die eine oder die mehreren weiteren Mäheinheiten (21) an dem weiteren langgestreichten Träger (17) über einen daran vorgesehenen Schlitten (22) befestigt sind.

3. Mähmaschine nach Anspruch 1 oder 2, dadurch gekennzeichnet, daß der Schiitten (22) mit dem erstgenannten langgestreichten Träger (12) mittels des Gelenks (23) verbunden ist.

4. Mähmaschinen nach irgendeinem der vorangegangenen Ansprüche, dadurch gekennzeichnet, daß der erstgenannte Träger (12) durch Laufräder (13, 14) gestützt ist.

FIG.1.

FIG.2.